# EUROPÄISCHE PATENTSCHRIFT

(11) **EP 1 691 112 B1**
(45) Veröffentlichungstag und Bekanntmachung des Hinweises auf die Patenterteilung: **07.01.2009**
(21) Anmeldenummer: 06100877.7
(22) Anmeldetag: 26.01.2006
(51) Int. Cl.: F16J 15/02, B65D 53/02

(54) **Vorrichtung zum Abdichten von Gehäusen oder Behältern**
Sealing device for containers or housings
Dispositif d'étanchéité pour conteneurs ou boîtiers

(30) Priorität: 10.02.2005 DE 102005006134
(43) Veröffentlichungstag der Anmeldung: 16.08.2006
(73) Patentinhaber: Gealan Formteile GmbH, 95145 Oberkotzau (DE)
(72) Erfinder: Saunus, Christian, 08223 Grünbach (DE); Laubmann, Gerhard, 95119 Naila (DE)
(74) Vertreter: Fleuchaus, Michael A.

(56) Entgegenhaltungen:
- EP-A- 0 552 086
- US-A- 5 785 201
- US-A1- 2002 124 863
- US-A1- 2003 209 865

## Beschreibung

Die vorliegende Erfindung betrifft eine Vorrichtung zum Abdichten von verschließbaren Gehäusen oder Behältern. Insbesondere betrifft die vorliegende Erfindung eine Vorrichtung zum Abdichten von Gehäusen oder Behältern mit einer zumindest teilweise umlaufenden Dichtung an einem ersten Gehäuse- bzw. Behälterteil und einem damit korrespondierenden Vorsprung an einem zweiten Gehäuse- bzw. Behälterteil, wobei die beiden Gehäuse- bzw. Behälterteile zum Verschließen gegeneinander verspannt werden.

Dichtungen zum Abdichten von Hohlräumen beispielsweise in Form von Gehäusen bzw. Behältern gegen Feuchtigkeit sind vielseitig bekannt. Bei einer bekannten Lösung ist eine geschäumte Dichtung vorgesehen, welche in eine Vertiefung eines Gehäuseteils eingebracht wird und in welche ein am anderen Gehäuseteil angebrachter Vorsprung in Form eines Stegs eingedrückt wird. Diese Art der Abdichtung ist wegen eines erhöhten Herstellungsaufwands für das Einbringen, Aushärten und Abkühlen der geschäumten Dichtung insbesondere in einem zusätzlichen Arbeitsgang aufwendig und teuer. Zudem ist ein derartiger Dichtungsschaum häufig offenporig und kann daher Feuchtigkeit aufnehmen, was unerwünscht ist.

US 2002/0124863 A1 offenbart eine Vorrichtung zum Abdichten von Gehäusen, welche eine Dichtungseinrichtung mit einem wellenförmigen Querschnitt aufweist, wobei ein am oberen Gehäuseteil angeordneter Vorsprung im geschlossenen Zustand des Gehäuses in eines der Wellentäler der Dichtungseinrichtung eingreift und dieses gegen das untere Gehäuseteil presst.

Der Erfindung liegt daher die Aufgabe zugrunde, eine Vorrichtung zum Abdichten von Gehäusen oder Behältern zur Verfügung zu stellen, bei der die Nachteile des Standes der Technik überwunden werden und durch welche insbesondere die Abdichtung von aus Spritzgussteilen bestehenden Behältern bzw. Gehäusen ermöglicht wird, wobei die Herstellung der Abdichtungsvorrichtung mit verringertem Aufwand erfolgen soll.

Diese Aufgabe wird erfindungsgemäß durch eine Vorrichtung zum Abdichten von Gehäusen oder Behältern gelöst, welche die Merkmale des Anspruchs 1 aufweist. Weitere bevorzugte Ausführungsformen sind Gegenstand der Unteransprüche.

Demnach weist die erfindungsgemäße Vorrichtung zum Abdichten von Gehäusen oder Behältern wenigstens eine zumindest teilweise umlaufende Dichtungseinrichtung aus einem weichelastischen Material mit einem im wesentlichen offenen Querschnitt auf, wobei vorzugsweise die Dichtungseinrichtung mit einer Stützfläche des ersten Gehäuse- bzw. Behälterteils zumindest teilweise haftend, insbesondere stoff-, kraft- und/oder formschlüssig verbunden ist. In einem ersten Bereich weist die Dichtungseinrichtung wenigstens eine Andruckfläche auf und in einem, dem ersten Bereich im wesentlichen gegenüberliegenden zweiten Bereich wenigstens eine nutförmige Vertiefung, in welche ein Vorsprung des zweiten Gehäuse- bzw. Behälterteils beim Verschließen eingreift und hierdurch eine Kraft auf den zweiten Bereich ausgeübt wird, dergestalt daß der zweite Bereich in Richtung des ersten Bereiches bewegt wird und zwischen dem zweiten Bereich und der Andruckfläche eine Pressung besteht.

Bei einer bevorzugen Ausführungsform der Erfindung weist die Dichtungseinrichtung wenigstens einen zwischen dem ersten Bereich und dem zweiten Bereich angeordneten dritten Bereich auf, durch welchen beim Verschließen des Gehäuses bzw. Behälters die Pressung zwischen der Andruckfläche und dem zweiten Bereich der Dichtungseinrichtung vermittelt wird. Bei dieser Ausführungsform ist es besonders vorteilhaft, daß durch das übereinander Legen und Verpressen mehrerer Lagen des Dichtungsmaterials, welches im allgemeinen im wesentlichen verhältnismäßig dünnwandig ist, eine sehr genaue Vorgabe der Elastizitätseigenschaften der resultierenden mehrlagigen Anordnung von Dichtungsmaterial möglich ist.

Eine bevorzugte Gestaltung der Dichtungseinrichtung weist dabei einen E- oder S-förmigen Querschnitt auf, wobei vorzugsweise der obere Schenkel des E bzw. S den zweiten Bereich mit der nutförmigen Vertiefung aufweist, der untere Schenkel des E bzw. S den ersten Bereich mit der Andruckfläche und der dazwischen liegende Schenkel des E bzw. der mittlere Verbindungssteg des S den dritten Bereich, der bei der Ausübung einer im wesentlichen in Richtung der Andruckfläche gerichteten Kraft auf dem zweiten Bereich zwischen diesem und dem ersten Bereich und insbesondere der Andruckfläche gegen jeweils beide Bereiche zur Anlage kommt und hierdurch die Pressung zwischen dem zweiten Bereich und dem ersten Bereich vermittelt.

Bei einer weiteren bevorzugten Ausführungsform der Erfindung weist die Dichtungseinrichtung einen im wesentlichen C-förmigen Querschnitt auf, wobei beispielsweise der erste, untere Schenkel den ersten Bereich aufweist und mit der Gehäuse-Stützfläche verbunden ist und die Andruckfläche aufweist und der zweite, obere Schenkel den zweiten Bereich aufweist und insbesondere auf seiner Außenseite die nutförmige Vertiefung aufweist, in welche der Vorsprung des zweiten Gehäuse- bzw. Behälterteils eingreift.

Beim Zusammenfügen der Gehäuseteile wird durch den Eingriff des Vorsprungs des zweiten Gehäuse- bzw. Behälterteils der erste Bereich der C-förmigen Dichtungseinrichtung in Richtung des zweiten Bereichs bewegt, bis die beiden Schenkel zumindest teilweise gegeneinander zur Anlage kommen und zwischen ihnen eine Pressung besteht.

Vorzugsweise ist die Dichtungseinrichtung bezüglich des ersten Gehäuse bzw. Behälterteils so angeordnet, daß die Querschnittsöffnung oder die Querschnittsöffnungen der Dichtungseinrichtung zur Gehäuseinnenseite weist, und beispielsweise im Falle der C- oder E-förmigen Dichtungseinrichtung der die ersten, zweiten und/oder dritten Bereiche verbindende seitliche Rückenbereich zur Gehäuseaußenseite weisend angeordnet ist. Je nach Anwendungsfall der erfindungsgemäßen Dichtungseinrichtung besteht jedoch selbstverständlich auch die Möglichkeit diese in umgekehrter Anordnung, also mit der bzw. den Querschnittsöffnungen zur Gehäuseaußenseite hinweisend bzw. dem seitlichen Rückenbereich zur Gehäuseinnenseite hinweisend anzuordnen.

Bei einem bekannten Anwendungsfall mit druckführenden Gehäusen ist eine Anordnung der Querschnittsöffnung zur Gehäuseinnenseite hin vorteilhaft, da hierdurch im Anlagebereich des Vorsprungs des zweiten Gehäuseteils gegen die Dichtungseinrichtung eine Selbstsicherung oder Druckaktivierung derselben stattfindet. Diese Selbstsicherung bzw. Druckaktivierung erfolgt dabei in der Art, daß durch den Gehäuseinnendruck eine Erhöhung der Anpresskraft des zweiten Bereichs gegen den Vorsprungs des zweiten Gehäuseteils erfolgt und hierdurch eine Verstärkung der Dichtwirkung in diesem Bereich resultiert.

Selbstverständlich sind entsprechende Selbstsicherungs- oder Druckaktivierungsmechanismen bei anderen als der vorstehend beschriebenen Ausführungsform denkbar und je nach Anwendungsfall gewünscht.

Bei einer bevorzugten Ausführungsform der Erfindung ist der erste und/oder dritte Bereich und insbesondere die Andruckfläche mit wenigstens einer Verdickung bzw. einer Ausbauchung versehen, gegen welche der die nutförmige Vertiefung aufweisende zweite Bereich der Dichtungseinrichtung zur Anlage kommt. Hierdurch wird es möglich, daß durch die Wahl der Materialstärke und/oder Form der Dichtungseinrichtung im Bereich der Andruckfläche die Kraft, welche zum Verbinden und vorzugsweise zum abgedichteten Verbinden der beiden Gehäuse- bzw. Behälterteile erforderlich ist, vorgebbar ist.

Insbesondere kann durch diese Maßnahme eine Vorrichtung zum flüssigkeitsdichten und/oder gasdichten Verschließen eines Gehäuses oder Behälters geschaffen werden, bei der ein lediglich geringer Schließdruck ausreichend ist, um die beiden Gehäuse- bzw. Behälterteile flüssigkeitsdicht miteinander zu verbinden.

Zudem kann durch eine entsprechende Ausgestaltung der Andruckfläche gewährleistet werden, daß eine durch die elastische Dichtungseinrichtung beim Verschließen des Gehäuses bzw. Behälters auf den Vorsprung des zweiten Gehäuse- oder Behälterteils wirkende Federkraft auch nach einer Vielzahl von Öffnungs- oder Schließvorgängen oder aber nach einer langen Verschlußdauer im wesentlichen konstant bleibt, was beim Stand der Technik häufig aufgrund einer Verringerung der Elastizität wie auch der Bildung eines Druckverformungsrestes des geschäumten Dichtungsmaterials nicht der Fall ist.

Besonders bevorzugt ist vorgesehen, daß wenigstens eine Verdickung bzw. Ausbauchung in Form einer Hohlwulst gebildet ist, welche vorzugsweise glockenförmig und unter dem Schließdruck verformbar ausgebildet ist. Ebenso vorteilhaft ist eine Verdickung bzw. Ausbauchung in Form einer Massivwulst oder einer keilförmigen Verdickung.

Bevorzugt weist der zweite Bereich der Dichtungseinrichtung auf der der nutförmigen Vertiefung im wesentlichen gegenüber liegenden Materialseite wenigstens eine hierzu korrespondierende Verdickung bzw. Ausbauchung auf, welche insbesondere gegen die Verdickung bzw. Ausbauchung des ersten Bereichs bzw. der Andruckfläche zur Anlage kommt, so daß ein definierter und gegebenenfalls punktueller Kontakt zwischen den beiden sich berührenden Bereichen der Dichtungseinrichtung gewährleistet wird. Eine derartige Ausführungsform erweist sich beispielsweise als besonders geeignet für die Verwirklichung einer Selbstsicherung bzw. Druckaktivierung, wie vorstehend beschrieben.

Bei einer weiteren bevorzugten Ausführungsform weist der erste und/oder dritte Bereich und insbesondere die Andruckfläche wenigstens eine Ausnehmung auf, in welche sich der hierzu korrespondierende zweite bzw. dritte Bereich der Dichtungseinrichtung beim Verbinden der Gehäuseteile einlegt und somit die beiden sich berührenden Bereiche der Dichtungseinrichtung in flächigem Kontakt stehen. Auf diese Weise tritt gegebenenfalls zusätzlich zu der durch die Pressung zwischen den beiden Bereichen der Dichtungseinrichtung erzielten Dichtwirkung eine Labyrinth-Dichtwirkung hinzu, so daß hierdurch die Abdichtung bei geringen Preßdrücken verbessert wird.

Bei einer weiteren bevorzugten Ausführungsform ist der erste, zweite und/oder dritte Bereich in einem vorderen Teilbereich derart ausgebildet, daß er die Stirnflächen wenigstens eines der beiden oder mehreren anderen Bereiche im verschlossenen Zustand des Gehäuse bzw. Behälters zumindest teilweise überlappt. Auf diese Weise besteht, je nach Ausführungsform, ebenfalls die Möglichkeit einer Druckaktivierung bzw. Selbstsicherung der Dichtungseinrichtung zu gewährleisten, wobei hier für den Fall einer Erhöhung des auf den überlappenden Bereich wirkenden Druckes eine Verstärkung der Dichtwirkung zwischen den einzelnen Bereichen der Dichtungseinrichtung erfolgt. Auf diese Weise kann ebenfalls eine Verbesserung der Gesamtdichtwirkung der erfindungsgemäßen Dichtungseinrichtung erzielt werden.

Besonders günstige Ausführungsformen der vorderen Teilbereiche des ersten, zweiten und/oder dritten Bereichs von selbstsichernden bzw. druckaktivierenden Dichtungseinrichtungen weisen dabei beispielsweise eine Querschnittsform ähnlich einem liegenden L, T oder Y auf.

Bevorzugt ist die Stützfläche des ersten Gehäuse- bzw. Behälterteils rückseitig zur Andruckfläche des ersten Bereichs der Dichtungseinrichtung angeordnet. Bei einer weiteren besonders bevorzugten Ausführungsform weist das erste Gehäuse- bzw. Behälterteil weiterhin eine seitliche Stützfläche auf, gegen welche der den ersten und zweiten Bereich der Dichtungseinrichtung verbindende Teil zumindest teilweise anliegt und vorzugsweise zumindest teilweise mit dieser haftend verbunden ist.

Bei einer Weiterbildung der Erfindung ist weiterhin ein Befestigungsvorsprung an dem den ersten und zweiten Bereich der Dichtungseinrichtung verbindende Teil vorgesehen, welcher mit dem ersten Gehäuse- bzw. Behälterteil insbesondere im Bereich des Abschlusses der seitlichen Stützfläche form- und/oder stoffschlüssig verbunden ist, wodurch die haftende Verbindung des ersten Gehäuseteils mit der Dichtungseinrichtung in einem durch mechanische Verformung und/oder Zugbeanspruchung besonders stark beanspruchten Bereich verstärkt wird, so daß ein Lösen der Dichtungseinrichtung von dem Gehäuse- oder Behälterteil verhindert wird.

Besonders bevorzugt ist die Dichtungseinrichtung an das Gehäuse- bzw. Behälterteil angespritzt, insbesondere im Zwei- oder Mehrkomponenten-Spritzverfahren zumindest bereichsweise angespritzt. Auf diese Weise ermöglicht es die Erfindung abgedichtete Gehäuse in einem Spritzvorgang und damit in erheblich kürzerer Verfahrenszeit im Vergleich zu bekannten Gehäuseabdichtungen herzustellen und überdies eine vielfach geforderte Unverlierbarkeit der Dichtung zu gewährleisten. Insbesondere wird durch die besondere Ausgestaltung des Querschnittes der Dichtungseinrichtung und deren räumlicher Orientierung bezüglich des ersten Gehäuseteils die Herstellung der erfindungsgemäßen Vorrichtung zur Abdichtung von Gehäusen oder Behältern im Zwei-Komponenten-Spritzverfahren begünstigt, weil hierdurch ein leichtes Entformen des die Dichtungseinrichtung aufweisenden Gehäuseteils ermöglicht wird.

Bei der erfindungsgemäßen Dichtungseinrichtung erweist es sich überraschenderweise auch als besonders vorteilhaft, daß durch den Eingriff des Vorsprungs des zweiten Gehäuse- bzw. Behälterteils bereits vor dem festen Verschließen des Gehäuses bzw. Behälters eine Führung des zweiten Gehäuseteils erfolgt, so daß beispielsweise im Falle einer ovalen, kreis- oder polygonförmigen Gehäuseöffnung mit einer entsprechenden umlaufenden erfindungsgemäßen Dichtungseinrichtung durch das lockere Einsetzen des Vorsprungs des zweiten Gehäuseteils in die Nut des zweiten Bereichs der erfindungsgemäßen Dichtungseinrichtung eine seitliche Versetzung des zweiten Gehäuseteils bezüglich der Dichtungseinrichtung bzw. bezüglich des ersten Gehäuseteils beim Schließvorgang vermieden werden kann.

Hierdurch wird beispielsweise auch im Falle von schwer zugänglichen Gehäuseöffnungen z. B. wie sie bei Gehäuseabdeckungen von KFZ-Scheinwerfern oder dergleichen ähnlichen Gehäusen häufig vorgefunden werden ein korrektes und paßgenaues Verschließen insbesondere mit einer sichergestellten Dichtwirkung möglich.

Weitere Vorteile und Merkmale der Erfindung ergeben sich auch aus der nachfolgenden detaillierten Beschreibung der Erfindung in Verbindung mit den Ansprüchen und der Zeichnung. Es zeigt:
- Fig. 1: eine Schnittdarstellung eines verschließbaren Gehäuses mit einer Abdichtung gemäß dem Stand der Technik;
- Fig. 2: eine Teilschnittansicht eines Gehäuses mit einer erfindungsgemäßen Dichtungsvorrichtung im offenen Zustand;
- Fig. 3: eine Teilschnittansicht eines Gehäuses mit einer erfindungsgemäßen Dichtungsvorrichtung gemäß Fig. 2 im geschlossenen Zustand;
- Fig. 4A und 4B: eine weitere Ausführungsform der vorliegenden Erfindung mit einer geänderten Formgebung des ersten Bereichs und insbesondere der Andruckfläche;
- Fig. 5A und 5B: eine weitere Ausführungsform der vorliegenden Erfindung mit einer geän- derten Formgebung des ersten Bereichs und insbesondere der Andruckfläche;
- Fig. 6A und 6B: eine weitere Ausführungsform der vorliegenden Erfindung mit einem geänderten Querschnitt der Dichtungseinrichtung und einer geänderten Formgebung des ersten Bereichs und insbesondere der Andruckfläche mit einer vergrößerten Anlagefläche.

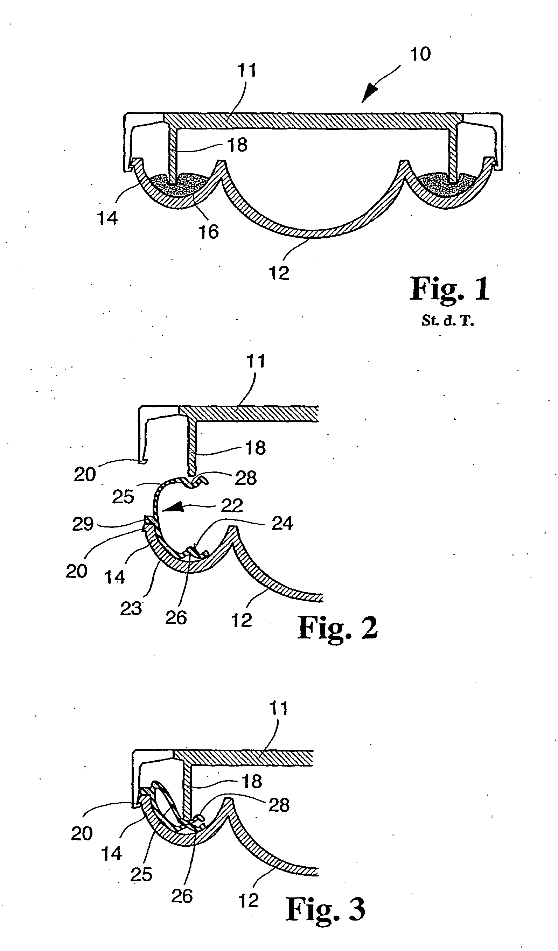

Fig. 1 zeigt eine Vorrichtung zum Abdichten von Gehäuse gemäß dem Stand der Technik in Schließstellung. Das Gehäuse 10 besteht aus einem Oberteil 11 und einem Unterteil 12, welche im geschlossenen Zustand mit Hilfe von Rasteinrichtungen gegeneinander verspannt gehalten werden. Eine in eine im wesentlichen umlaufende Vertiefung im Gehäuseunterteil 12 eingebrachte Polyurethanschaum-Raupe 16 dient der Abdichtung des Gehäuseinnenraums gegen Flüssigkeit. Beim Verschließen des Gehäuses 10 wird ein stegförmiger Vorsprung 18 des Gehäuseoberteils 11 in die geschäumte Dichtung 16 eingedrückt, um die Abdichtung zu gewährleisten.

Die Erfindung wird nachfolgend an einem im wesentlichen gleichartigen Gehäuse beschrieben, wie es im Stand der Technik gezeigt ist. Es sei jedoch ausdrücklich darauf hingewiesen, daß die Erfindung ebenso bei beliebigen anderen Gehäuse- oder Behälterarten zum Einsatz kommen kann, wie z.B. bei KFZ-Teilen, Gehäusen für elektrische oder elektronische Anwendungen, zur Aufbewahrung von Nahrungsmitteln oder dergleichen.

Gemäß Fig. 2 weist eine erfindungsgemäße Vorrichtung zum Abdichten von Gehäusen oder Behältern eine Dichtungseinrichtung 22 mit einem im wesentlichen C-förmigen Querschnitt auf. Der erste Bereich 23 der Dichtungseinrichtung 22 ist zumindest teilweise mit einer Stützfläche 14 des Gehäuseunterteils 12 haftend verbunden und vorzugsweise im Zwei- oder Mehrkomponenten-Spritzverfahren an die Stützfläche 14 angespritzt. Die Stützfläche 14 erstreckt sich vom unteren Bereich der Dichtungseinrichtung, welcher die Andruckfläche 24 aufweist bis in deren seitlichen Rückenbereich. Im Rückenbereich der Dichtungseinrichtung ist diese überdies durch einen Befestigungsvorsprung 29 mit der Stirnfläche der Stützfläche haftend verbunden, so daß insbesondere ein Ablösen der Dichtungseinrichtung von dem Gehäuseunterteil 12 bzw. der Stützfläche 14 bei einer in horizontaler Richtung wirkenden Zugkraft auf die Dichtungseinrichtung vermieden wird.

Um die beiden Gehäuseteile nach dem Verschließen entgegen der Federkraft der Dichtungseinrichtung im geschlossenen Zustand zu halten, sind Rasteinrichtungen 20 vorgesehen.

Der erste Bereich 23 der Dichtungseinrichtung weist eine ausgebauchte Andruckfläche 24 in Form einer Hohlwulst 26 auf. Der zweite Bereich 25 der Dichtungseinrichtung 22 ragt aus der Gehäusevertiefung über die seitliche Stützfläche 14 heraus und weist eine zur ausgebauchten Andruckfläche 24 im wesentlichen korrespondierende nutförmigen Vertiefung 28 auf, die dem Verlauf des beim Verschließen eingreifenden stegförmigen Vorsprungs 18 des Gehäuseoberteils im wesentlichen folgt. Auf der der nutförmigen Vertiefung 28 im wesentlichen gegenüberliegenden Materialseite weist der zweite Bereich zudem eine dem Verlauf der nutförmigen Vertiefung 28 im wesentlichen folgende und hierzu korrespondierende Ausbauchung auf.

Die Dichtungseinrichtung 22 kann als Gummidichtung oder auch aus einem weich-thermoplastischen Material ausgebildet sein. Bei der Verwendung einer Gummidichtung wird der erste Bereich 23 zumindest teilweise mit der Stützfläche 14 verklebt. Bei einer Ausführungsform der Erfindung mit einer im Zwei- oder Mehrkomponenten-Spritzverfahren zusammen mit dem Gehäuse hergestellten Dichtungseinrichtung wird das weich-thermoplastische Material an die Stützfläche 14 unmittelbar angespritzt. Ebenso wie im Falle des Zwei- oder Mehrkomponenten-Spritzverfahren besteht selbstverständlich die Möglichkeit die Dichtungseinrichtung 22 an das Gehäuseteil heiß anzuspritzen.

Fig. 3 zeigt die Vorrichtung zum Abdichten von Gehäusen gemäß Fig. 2 im geschlossenen Zustand, wobei die Rasteinrichtungen 20 ineinander greifen und so das oberer Gehäuseteil 11 gegen das untere Gehäuseteil 12 entgegen der Federkraft der Dichtungseinrichtung 22 verspannt bleibt. Wie in Fig. 2 gezeigt, greift der stegförmige Vorsprung 18 in die nutförmige Vertiefung 28 des zweiten Bereichs 25 ein und drückt diesen bzw. die der nutförmigen Vertiefung gegenüber liegende Ausbauchung des zweiten Bereichs 25 gegen die ausgebauchte Andruckfläche 24 des ersten Bereichs 23. Hierbei klappt der gesamte zweite Bereich 25 der Dichtungseinrichtung 22 nach unten, so daß sich die Ausbauchungen des zweiten Bereiches 25 und des ersten Bereiches 26 im Bereich der Andruckfläche 24 berühren und gegeneinander gedrückt werden.

Durch das Eindrücken des stegförmigen Vorsprungs 18 in die nutförmige Vertiefung 28 erfolgt eine Abdichtung zwischen dem stegförmigen Vorsprung 18 und der Dichtungseinrichtung 22, welche insbesondere auf einer Dichtungswirkung durch die Pressung des stegförmigen Vorsprungs 18 gegen die Dichtungseinrichtung 22 bzw. deren nutförmige Vertiefung 28 beruht. Überdies wird jedoch auch eine Labyrinth-Dichtwirkung durch den Eingriff des stegförmigen Vorsprungs 18 in die nutförmige Vertiefung erzielt, welche insbesondere von der konkreten Ausgestaltung der nutförmigen Vertiefung abhängig ist. Dies ermöglicht auf einfache Weise die Verbesserung der Dichtwirkung der erfindungsgemäßen Vorrichtung zur Abdichtung von Gehäusen oder Behältern.

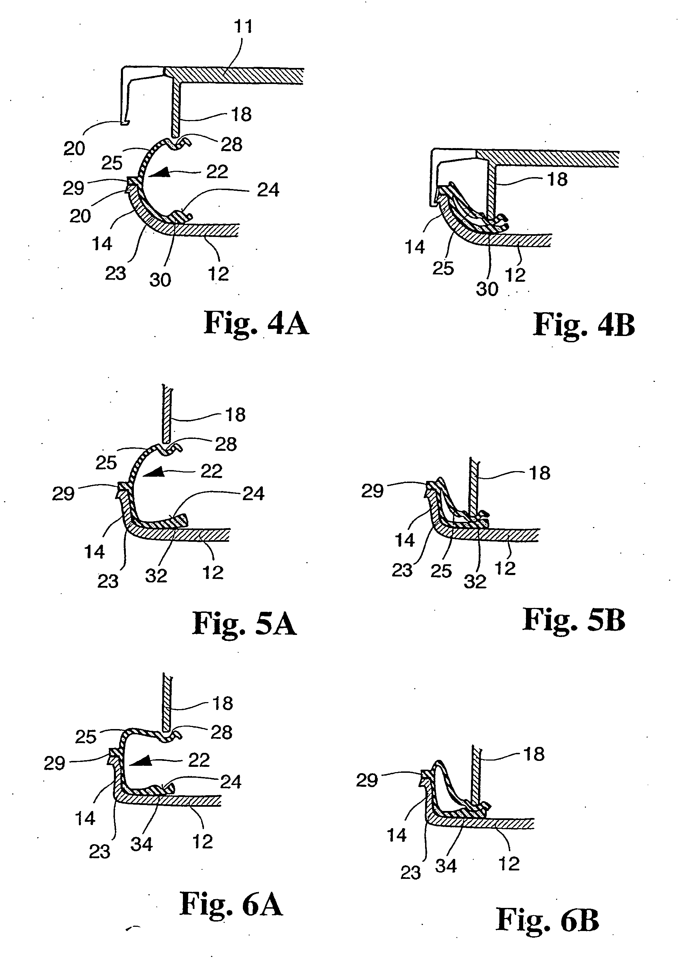

Die Figuren 4A bis 6A zeigen weitere Ausführungsformen der erfindungsgemäßen Dichtungsvorrichtung, wobei die Andruckfläche 24 bzw. der erste Bereich 23 der Dichtungseinrichtung 22 verschiedene Ausgestaltungen aufweisen. Gemäß Fig. 4A wurde die Holwulst durch eine Massivwulst 30 ersetzt, wodurch insbesondere eine exakte Vorgabe des benötigten Schließdrucks durch die Variation der Materialstärke der Massivwulst 30 ermöglicht wird. Gemäß Fig. 5A wurde die Massivwulst des ersten Bereiches durch eine keilförmige Verdikkung 32 ersetzt. Fig. 6A zeigt ebenfalls einen keilförmig verdickt ausgeführten ersten Bereich 34, welcher in seiner Andruckfläche 24 eine Ausnehmung aufweist, die der zur nutförmigen Vertiefung korrespondierenden Ausbauchung des zweiten Bereichs im wesentlichen entspricht, so daß diese sich im geschlossenen Zustand im wesentlichen flächig in die Ausnehmung der Andruckfläche 24 einlegt.

In den Figuren 4B bis 6B sind jeweils die zu den Figuren 4A bis 6A entsprechenden Ausführungsformen der erfindungsgemäßen Dichtungsvorrichtung in Schließstellung des Gehäuses gezeigt. Insbesondere ist erkennbar, daß für die erfindungsgemäße Abdichtung eines Gehäuses die Formgebung der Stützfläche 14 im wesentlichen unerheblich ist, da die Dichtwirkung zwischen dem stegförmigen Vorsprung 18, dem zweiten Bereich 25 bzw. der nutfömigen Ausnehmung 28, sowie dem ersten Bereich 23 bzw. der Andruckfläche 24 besteht.

Die Fig. 6B zeigt weiterhin eine Ausführungsform des zweiten Bereichs 25 der Dichtungseinrichtung, bei dem ein vorderer Teilbereich so ausgeführt ist, dass er im geschlossenen d. h. dichtenden Zustand der Dichtungseinrichtung 22 die Stirnfläche des hierzu korrespondierenden ersten Bereichs 34 der Dichtungseinrichtung überlappt. Durch die besondere Formgebung der Andruckfläche 24 des keilförmig verdickt ausgeführten ersten Bereiches 34 und die hinzu tretende Überlappung durch den vorderen Teilbereich des zweiten Bereichs 25 erfolgt im geschlossenen Zustand die Bildung eines Dichtlabyrinths, welches zusätzlich zur Pressung zwischen dem ersten und dem zweiten Bereich eine weitere Verbesserung der Dichtwirkung insbesondere im Falle einer Abdichtung gegen das Austreten von Flüssigkeiten bewirkt.

Die in Fig. 6B dargestellte Ausführungsform zeichnet sich über dies auch durch eine selbstsichernde bzw. druckaktivierende Wirkung aus, da beim Anstehen eines Innendrucks gegen die Dichtungseinrichtung 22 zum einen der die Stirnfläche des ersten Bereichs 34 überlappende vordere Teilbereich des zweiten Bereichs 25 einen höheren Druck gegen die Stirnfläche des ersten Bereiches erfährt und gleichzeitig eine Druckaktivierung im Bereich des in die Nut 28 eingreifenden Vorsprungs 18 auf entsprechende Weise erfolgt.

Es sei insbesondere auch darauf hingewiesen, dass eine entsprechende selbstsichernde bzw. druckaktivierende Wirkung zwischen dem zweiten Bereich 25 und dem in die Nut 28 eingreifenden Vorsprung 18 bei den in den Figuren 4A und 4B bzw. 5A und 5B dargestellten Dichtungseinrichtungen ebenfalls verwirklicht ist.

Durch die verschiedenen Ausführungen des ersten Bereichs und insbesondere der Andruckfläche wie auch des zweiten Bereichs und der nutförmigen Vertiefung lassen sich die Anforderungen an die Dichtigkeit der erfindungsgemäßen Dichtungsvorrichtung insbesondere hinsichtlich Druckdichtigkeit, Viskosität und Schmiereigenschaft beispielsweise einer Flüssigkeit, gegen deren Eindringen das Gehäuse abgedichtet werden soll anpassen.

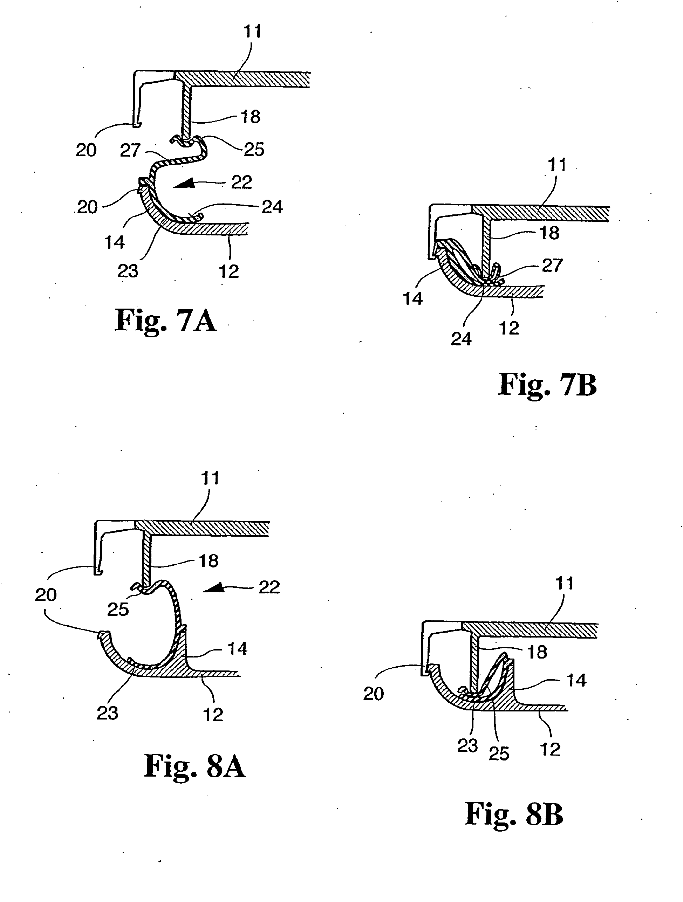

Die Figuren 7A und 7B zeigen eine weitere Ausführungsform einer erfindungsgemäßen Dichtungseinrichtung, bei der zwischen dem zweiten Bereich und dem ersten Bereich und insbesondere der Andruckfläche 24 ein mittlerer Bereich 27 vorgesehen ist, welcher beim Schließen des Gehäuses zwischen dem ersten und zweiten Bereich verpresst wird. Die in den Fig. 7A und 7B gezeigte Dichtungseinrichtung weist dabei im wesentlichen die Form eines umgekehrten S auf, wobei der untere Teil der S-förmigen Dichtungseinrichtung, wie bei den vorstehend beschriebenen Dichtungseinrichtungen, an die Anlagefläche 14 im wesentlichen flächig anliegt und besonders bevorzugt stoffschlüssig mit dieser verbunden ist.

Insbesondere ist in Fig. 7B auch erkennbar, dass bei dieser Ausführungsform eine besonders starke Selbstsicherung bzw. Druckaktivierung der Dichtungseinrichtung für den Fall des Einwirkens eines Innendrucks erfolgt.

Entgegen den Darstellungen in den Figuren 1-6 ist die Dichtungseinrichtung gemäß den Figuren 8A und 8B mit ihrer Querschnittsöffnung zur Gehäuseaußenseite hin angeordnet. Dementsprechend ist der den ersten Bereich 23 und zweiten Bereich 25 verbindende Rükkenbereich der Dichtungseinrichtung und insbesondere auch der Befestigungsvorsprung 29, welcher an dem Rückenbereich angeordnet ist zur Gehäuseinnenseite weisend positioniert.

Eine entsprechend umgekehrte Anordnung der Dichtungseinrichtung ist selbstverständlich für alle vorstehend beschriebenen Ausführungsformen der erfindungsgemäßen Dichtungseinrichtung, je nach den Anforderungen, welche an die erfindungsgemäße Vorrichtung zum Abdichten von Gehäusen gestellt werden, möglich.

## Patentansprüche

1. Vorrichtung zum Abdichten von Gehäusen oder Behältern (10) mit wenigstens einer zumindest teilweise umlaufenden Dichtungseinrichtung (22) aus einem weichelastischen Material, einer Stützfläche (14) an einem ersten Gehäuse- bzw. Behälterteil (12) und einem Vorsprung (18) an einem zweiten Gehäuse- bzw. Behälterteil (11), wobei die beiden Gehäuse- bzw. Behälterteile (11, 12) zum Verschließen gegeneinander gedrückt werden,
**dadurch gekennzeichnet, dass**
die Dichtungseinrichtung (22) im wesentlichen einen offenen Querschnitt hat und in einem ersten Bereich (23) wenigstens eine Andruckfläche (24) aufweist und in einem, dem ersten Bereich (23) im wesentlichen gegenüber liegenden zweiten Bereich (25) wenigstens eine nutförmige Vertiefung (28),
wobei der Vorsprung (18) beim Verschließen des Gehäuses bzw. Behälters (10) in die nutförmige Vertiefung (28) eingreift und eine Kraft auf den zweiten Bereich (25) ausübt, dergestalt daß der zweite Bereich (25) in Richtung des ersten Bereiches (23) bewegt wird und zwischen dem zweiten Bereich (25) und der Andruckfläche (24) eine Pressung besteht.

2. Vorrichtung gemäß Anspruch 1,
**dadurch gekennzeichnet, dass**
die Dichtungseinrichtung (22) mit der Stützfläche (14) zumindest teilweise haftend, stoff- und/oder formschlüssig verbunden ist.

3. Vorrichtung gemäß Anspruch 1 oder 2,
**dadurch gekennzeichnet, dass**
die Dichtungseinrichtung (22) an das erste Gehäuse- bzw. Behälterteil (12) und insbesondere an die Stützfläche (14) angespritzt ist, insbesondere im Zwei-Komponenten-Spritzverfahhren angespritzt ist.

4. Vorrichtung gemäß einem der vorhergehenden Ansprüche,
**dadurch gekennzeichnet, dass**
die Dichtungseinrichtung (22) wenigstens einen zwischen dem ersten Bereich (23) und dem zweiten Bereich (25) angeordneten dritten Bereich (27) aufweist, durch welchen beim Verschließen des Gehäuses bzw. Behälters die Pressung zwischen dem zweiten Bereich (25) und der Andruckfläche (24) vermittelt wird.

5. Vorrichtung gemäß einem der Ansprüche 1-3,
**dadurch gekennzeichnet, dass**
der Querschnitt der Dichtungseinrichtung im wesentlichen C-förmig ist, wobei ein erster, vorzugsweise unterer Schenkel den ersten Bereich (23) mit der Andruckfläche (24) aufweist und ein zweiter, vorzugsweise oberer Schenkel den zweiten Bereich (25) mit der nutförmigen Vertiefung (28) ausweist.

6. Vorrichtung gemäß Anspruch 4,
**dadurch gekennzeichnet, dass**
der Querschnitt der Dichtungseinrichtung im wesentlichen E- oder S-förmig ist, wobei ein erster, vorzugsweise unterer Schenkel den ersten Bereich (23) mit der Andruckfläche (24) aufweist und ein zweiter, vorzugsweise oberer Schenkel den zweiten Bereich (25) mit der nutförmigen Vertiefung (28) aufweist und zwischen dem ersten und zweiten Schenkel ein Steg vorgesehen ist, welcher den dritten Bereich (27) aufweist.

7. Vorrichtung gemäß einem der vorhergehenden Ansprüche,
**dadurch gekennzeichnet, dass**
der erste Bereich (23) und/oder dritte Bereich (27) und insbesondere die Andruckfläche (24) eine Verdickung bzw. Ausbauchung aufweist.

8. Vorrichtung gemäß Anspruch 7,
**dadurch gekennzeichnet, dass**
die Ausbauchung durch eine Holwulst (26) gebildet ist, welche vorzugsweise glockenförmig ausgeführt ist und unter dem Schließdruck beim Verbinden der Gehäuseteile (11, 12) verformbar ist.

9. Vorrichtung gemäß Anspruch 7,
**dadurch gekennzeichnet, dass**
die Ausbauchung bzw. Verdickung durch eine Massivwulst (30) oder durch eine keilförmige Verdickung (32, 34) gebildet ist.

10. Vorrichtung gemäß einem der vorhergehenden Ansprüche,
**dadurch gekennzeichnet, dass**
der zweite Bereich (25) wenigstens eine Ausbauchung bzw. Verdickung aufweist, welche vorzugsweise auf der der nutförmigen Vertiefung (28) im wesentlichen gegenüberliegenden Materialseite angeordnet ist.

11. Vorrichtung gemäß einem der vorhergehenden Ansprüche,
**dadurch gekennzeichnet, dass**
der erste Bereich (23) und/oder dritte Bereich (27) und insbesondere die Andruckfläche (24) eine Ausnehmung aufweist, in welche sich der zweite Bereich (25) der Dichtungseinrichtung (22) beim Verbinden der Gehäuseteile (11, 12) zumindest teilweise einlegt.

12. Vorrichtung gemäß einem der vorhergehenden Ansprüche,
**dadurch gekennzeichnet, dass**
der erste, zweite und/oder dritte Bereich (23; 25; 27) in einem vorderen Teilbereich derart ausgebildet ist, daß er die Stirnfläche wenigstens eines der beiden anderen Bereiche zumindest teilweise überlappt.

13. Vorrichtung gemäß einem der vorhergehenden Ansprüche,
**dadurch gekennzeichnet, dass**
die Dichtungseinrichtung (22) wenigstens einen Befestigungsvorsprung (29) am ersten Bereich (23), zweiten Bereich (25), dritten Bereich (27) und/oder einem diese Bereiche verbindenden Bereich aufweist, welcher derart mit der Stützfläche (14), einer Stirn- und/oder Abschlußfläche hiervon verbunden ist, daß ein Ablösen der Dichtungseinrichtung (22) von der Stützfläche (14) in einem durch mechanische Verformung und/oder Zugbeanspruchung besonders stark beanspruchten Bereich unterbunden wird.

## Claims

1. A device for sealing housings or containers (10) having at least one at least partly circumferential sealing means (22) made of a soft elastic material, a support surface (14) on a first housing part or container part (12) and a projection (18) on a second housing part or container part (11), wherein the two housing parts or container parts (11, 12) are pressed against each other for closing,
**characterized in that**
the sealing means (22) has a substantially open cross-section and includes at least one pressure surface (24) in a first portion (23) and at least one groove-shaped depression (28) in a second portion (25) substantially opposite the first portion (23),
wherein, upon closing the housing or container (10), the projection (18) engages with the groove-shaped depression (28) and exerts a force on the second portion (25) in such a way that the second portion (25) is moved towards the first portion (23) and there is pressing action between the second portion (25) and the pressure surface (24).

2. The device of Claim 1,
**characterized in that**
the sealing means (22) is connected to the support surface (14) at least partly by adhesion, positive substance bonding and/or positive engagement.

3. The device of Claim 1 or 2,
**characterized in that**
the sealing means (22) is extruded onto the first housing part or container part (12) and in particular onto the support surface (14), in particular using a two-component extrusion process.

4. The device of any of the preceding claims,
**characterized in that** the sealing means (22) includes at least one third portion (27) arranged between the first portion (23) and the second portion (25), through which third portion the pressing action is transferred between the second portion (25) and the pressure surface (24) upon closing the housing or container.

5. The device of any of claims 1 - 3,
**characterized in that**
the cross-section of the sealing means is substantially C-shaped, wherein a first, preferably lower leg includes the first portion (23) with the pressure surface (24), and a second, preferably upper leg includes the second portion (25) with the groove-shaped depression (28).

6. The device of Claim 4,
**characterized in that**
the cross-section of the sealing means is substantially E- or S-shaped, wherein a first, preferably lower leg includes the first portion (23) with the pressure surface (24), and a second, preferably upper leg includes the second portion (25) with the groove-shaped depression (28), and between the first and the second leg there is provided a bar which includes the third portion (27).

7. The device of any of the preceding claims,
**characterized in that**
the first portion (23) and/or third portion (27), and in particular the pressure surface (24), include a thickening or convexity.

8. The device of Claim 7,
**characterized in that**
the convexity is formed by a hollow bulge (26) which preferably is configured bell-shaped and is deformable under the closing pressure upon connecting the housing parts (11, 12).

9. The device of Claim 7,
**characterized in that** the convexity or thickening is formed by a solid bulge (30) or by a wedge-shaped thickening (32, 34).

10. The device of any of the preceding claims,
**characterized in that**
the second portion (25) has at least one convexity or thickening which is preferably arranged on the material side substantially opposite to the groove-shaped depression (28).

11. The device of any of the preceding claims,
**characterized in that**
the first portion (23) and/or third portion (27), and in particular the pressure surface (24), have a recess into which the second portion (25) of the sealing means (22) is at least partly inserted upon connecting the housing parts (11, 12).

12. The device of any of the preceding claims,
**characterized in that**
the first, second and/or third portion (23; 25; 27) is configured, in a front partial portion, in such a way that it at least partly overlaps the end face of at least one of the two other portions.

13. The device of any of the preceding claims,
**characterized in that**
on the first portion (23), second portion (25), third portion (27) and/or a portion connecting these portions, the sealing means (22) has at least one fastening projection (29) which is connected to the support surface (14), an end face and/or terminal face thereof in such a way that the sealing means (22) is prevented from being detached from the support surface (14) in a portion particularly strained by mechanical deformation and/or tensile loads.

## Revendications

1. Dispositif pour étanchéifier des boîtiers ou des récipients (10) avec au moins un dispositif d'étanchéité (22) au moins en partie circulaire en un matériau élastique souple, une surface de support (14) à une première partie de boîtier ou récipient (12) et une saillie (18) à une deuxième partie de boîtier ou récipient (11), où les deux parties de boîtier ou récipient (11, 12) sont pressées l'une contre l'autre pour fermeture,
**caractérisé en ce que**
le dispositif d'étanchéité (22) a en substance une coupe transversale ouverte et présente dans une première zone (23) au moins une surface d'application de pression (24) et présente dans une seconde zone (25) en substance faisant face à la première zone (23), au moins un renfoncement (28) en forme de rainure,
où la saillie (18) lors de la fermeture du boîtier ou du récipient (10) s'engage dans le renfoncement en forme de rainure (28) et exerce une force sur la seconde zone (25) de telle manière que la seconde zone (25) est déplacée en direction de la première zone (23) et qu'il existe une pression entre la seconde zone (25) et la surface d'application de pression (24).

2. Dispositif selon la revendication 1
**caractérisé en ce que**
le dispositif d'étanchéité (22) est lié avec la surface de support (14) au moins en partie de manière adhérente, par liaison de matière et/ou de forme.

3. Dispositif selon la revendication 1 ou 2
**caractérisé en ce que**
le dispositif d'étanchéité (22) est moulé par injection à la première partie de boîtier ou récipient (12) et en particulier à la surface de support (14), en particulier est moulé par injection en procédé d'injection à deux composants.

4. Dispositif selon l'une des revendications précédentes,
**caractérisé en ce que**
le dispositif d'étanchéité (22) présente au moins une troisième zone (27) disposée entre la première zone (23) et la seconde zone (25), par laquelle est transmise la pression entre la seconde zone (25) et la surface d'application de pression (24) lors de la fermeture du boîtier ou du récipient.

5. Dispositif selon l'une des revendications 1-3
**caractérisé en ce que**
la coupe transversale du dispositif d'étanchéité est en substance en forme de C, où une première de préférence aile inférieure présente la première zone (23) avec la surface d'application de pression (24) et une seconde de préférence aile supérieure présente la seconde zone (25) avec le renfoncement en forme de rainure (28).

6. Dispositif selon la revendication 4
**caractérisé en ce que**
la coupe transversale du dispositif d'étanchéité est en substance en forme de E ou de S, où une première de préférence aile inférieure présente la première zone (23) avec la surface d'application de pression (24) et une seconde de préférence aile supérieure présente la seconde zone (25) avec le renfoncement en forme de rainure (28) et entre la première et la seconde aile est prévue une entretoise qui présente la troisième zone (27).

7. Dispositif selon l'une des revendications précédentes
**caractérisé en ce que**
la première zone (23) et/ou la troisième zone (27) et en particulier la surface d'application de pression (24) présente un épaississement ou un renflement.

8. Dispositif selon la revendication 7
**caractérisé en ce que**
le renflement est formé par un bourrelet creux (26) qui de préférence est réalisé en forme de cloche et est déformable sous la pression de fermeture lors de la liaison des parties de boîtier (11, 12).

9. Dispositif selon la revendication 7,
**caractérisé en ce que**
le renflement ou épaississement est formé par un bourrelet massif (30) ou par un épaississement cunéiforme (32, 34).

10. Dispositif selon l'une des revendications précédentes
**caractérisé en ce que**
la seconde zone (25) présente au moins un renflement ou épaississement, qui de préférence est disposé du côté du matériau faisant face en substance au renfoncement en forme de rainure (28).

11. Dispositif selon l'une des revendications précédentes
**caractérisé en ce que**
la première zone (23) et/ou la troisième zone (27) et en particulier la surface d'application de pression (24) présente un évidement dans lequel la seconde zone (25) du dispositif d'étanchéité (22) se met au moins en partie lors de la fermeture des parties de boîtier (11, 12).

12. Dispositif selon l'une des revendications précédentes
**caractérisé en ce que**
la première, seconde et/ou troisième zone (23, 25, 27) est formé dans une zone partielle avant de telle sorte qu'elle chevauche au moins en partie la surface de front d'au moins une des deux autres zones.

13. Dispositif selon l'une des revendications précédentes
**caractérisé en ce que**
le dispositif d'étanchéité (22) présente au moins une saillie de fixation (29) à la première zone (23), deuxième zone (25), troisième zone (27) et/ou à une zone à lier à une de ces zones, qui est liée de telle manière à la surface de support (14) d'une surface de front et/ou d'une surface terminale, qu'un détachement du dispositif d'étanchéité (22) de la surface de support (14) est empêché dans une zone particulièrement fortement sollicitée par déformation mécanique et/ou traction.
